# EUROPÄISCHE PATENTANMELDUNG

(11) **EP 0 953 833 A1**
(43) Veröffentlichungstag der Anmeldung: **03.11.1999**
(21) Anmeldenummer: 99108093.8
(22) Anmeldetag: 23.04.1999
(51) Int. Cl.: G01M 3/22

(54) **Verfahren zur Leckageermittlung an Gasleitungen**

(30) Priorität: 29.04.1998 DE 19819029
(71) Anmelder: Linde Aktiengesellschaft, 65189 Wiesbaden (DE)
(72) Erfinder: Ernst, Werner Prof. Dr., 72072 Tübingen (DE)

(57) **Zusammenfassung**

Die Erfindung betrifft ein Verfahren zur Lecksuche an einer Gas-, insbesondere Erdgasleitung. Hierbei wird ein Gemisch aus einem Trägergas, insbesondere Erdgas, und einem in der Atmosphäre nur in geringer Konzentration vorkommendem Testgas durch die Leitung geleitet und an einer außerhalb der Leitung befindlichen Meßstelle das Testgas detektiert wird. Der Bereich zwischen der Leitung und der Meßstelle wird nicht gegen die Umgebung abgeschirmt.

## Beschreibung

Die Erfindung betrifft ein Verfahren zur Lecksuche an einer Gas-, insbesondere Erdgasleitung, wobei ein Gemisch aus einem Trägergas, insbesondere Erdgas, und einem in der Atmosphäre nur in geringer Konzentration vorkommendem Testgas durch die Leitung geleitet und an einer außerhalb der Leitung befindlichen Meßstelle das Testgas detektiert wird.

Rohrleitungssysteme können dadurch auf Lecks untersucht werden, daß ein Testgas durch die Leitung gefördert wird, welches im Fall einer Undichtigkeit aus dem Leitungsleck entweicht und nachgewiesen wird. Bei Flüssigkeitsleitungen kann das Testgas der Flüssigkeit beigemischt werden. Bei der Lecksuche an gasführenden Leitungen, bei denen das Testgas einem Trägergas zugemischt wird, tritt allerdings das Problem auf, daß aufgrund der hohen Strömungsgeschwindigkeit im Bereich eines Lecks keine hohen Testgaskonzentrationen, und damit kein nennenswerter Testgasfluß durch das Leck, zu erwarten sind.

Aus der DE-OS-25 11 759 ist daher ein Verfahren bekannt, bei dem die Leitung von außen mit einem Testgas besprüht wird, welches durch ein eventuell vorhandenes Leck in die Leitung eindringt und durch ein in der Leitung strömendes Trägergas zu einem an der Leitung angeschlossenen Detektor mitgerissen wird. Nachteilig an diesem Verfahren ist, daß der normale Gastransport durch die Leitung während der Lecksuche unterbrochen werden muß.

In der US-A-4,601,194 wird ein anderes Verfahren zur Lecksuche an Erdgasleitungen beschrieben. Hierzu wird in die zu untersuchende Leitung an der vermuteten Leckstelle eine Testgasquelle mit einem Helium-Erdgas-Gemisch unter einem Druck von mindestens 200 bar eingebracht und die Leitung an dieser Stelle außen mit einer Abschirmung umgeben. Im Falle einer Leckage an dieser Leitungsstelle diffundiert das aus der Testgasquelle unter hohem Druck ausströmende Helium durch das Leck und wird mittels eines innerhalb der Abschirmung befindlichen Sensors festgestellt.

Dieses Verfahren ist daher nur an leicht zugänglichen und entsprechend druckfesten Leitungen durchführbar.

Aufgabe vorliegender Erfindung ist es, ein verbessertes Verfahren der eingangs genannten Art aufzuzeigen, mit dem die aus dem Stand der Technik bekannten Nachteile vermieden werden und auch Lecks an schwer zugänglichen, insbesondere unterirdisch verlegten, Leitungen festgestellt werden können.

Diese Aufgabe wird erfindungsgemäß dadurch gelöst, daß der Bereich zwischen der Leitung und der Meßstelle nicht gegen die Umgebung abgeschirmt ist.

Durch umfangreiche Untersuchungen hat sich gezeigt, daß bei dem aus der US-A-4,601,194 bekannten Verfahren auf die Abschirmung der Meßstelle gegen die Umgebung verzichtet werden kann. Es ist somit erfindungsgemäß nicht nötig, den Bereich zwischen der untersuchten Leitungsstelle und der Meßstelle gegen das Eindringen oder Entweichen von Testgas aus oder in die Umgebung zu isolieren.

Ebenso ist es nicht notwendig, den Testgassensor unmittelbar an der Außenseite der zu untersuchenden Leitung vorzusehen. Die an der Meßstelle bestimmte Testgaskonzentration ist zwar bei dem erfindungsgemäßen Verfahren zwangsläufig niedriger als bei dem Verfahren nach der US-A-4,601,194, ist aber dennoch so hoch, daß eindeutig auf das Vorhandensein eines Lecks in der untersuchten Leitung geschlossen werden kann.

Das Verfahren hat sich insbesondere bei der Untersuchung unterirdisch verlegter Erdgasleitungen bewährt, wobei das Testgas an einer oberhalb der Erdoberfläche befindlichen Meßstelle detektiert wird. Die Erfindung erlaubt eine einfache, schnelle und billige Lecksuche an im Erdreich oder innerhalb eines Mauerwerks befindlichen Gasleitungen. Hierzu wird dem durch die Leitung strömenden Gas lediglich das Testgas beigemischt und am Erdboden bzw. an der Außenseite der Mauer das Testgas detektiert.

Vorzugsweise wird Helium als Testgas eingesetzt. Helium kommt in der Luft nur in einem sehr geringen Anteil vor, so daß auch kleinste Mengen an durch ein Leitungsleck entweichendem Helium den Gesamtheliumgehalt der Luft deutlich beeinflussen und so leicht nachgewiesen werden können. Zudem hat Helium aufgrund der kleinen Atomgröße ein sehr hohes Diffusionsvermögen.

Es kann sowohl ein vorgemischtes Testgas-Trägergas-Gemisch durch die Leitung geleitet werden, als auch eine bestimmte Menge Testgas dem bereits in der Leitung strömenden Trägergas zugegeben werden. Selbstverständlich wird die Lecksuche durch einen möglichst hohen Testgasgehalt in dem Gemisch begünstigt. Es hat sich aber gezeigt, daß es bei der Untersuchung von Erdgasleitungen von Vorteil ist, wenn der Testgasgehalt des Gemisches höchstens 10 Vol % beträgt. Bei einer derartigen Konzentration können Verbraucher, insbesondere Brenner, die mit dem Erdgas versorgt werden, auch während der Lecksuche, d.h. mit dem Erdgas-Testgas-Gemisch, weiter betrieben werden. Insbesondere bei Heliumbeimischungen bis zu 10 Vol % haben sich keinerlei negative Auswirkungen auf den Brennerbetrieb ergeben. Zudem steigt die Empfindlichkeit des Verfahrens bei höheren Testgaskonzentrationen nur noch unterproportional an.

Es ist jedoch von Vorteil, einen bestimmten Mindestgehalt an Testgas in dem Gemisch einzuhalten. Anderenfalls sinkt die Empfindlichkeit des Verfahrens zu stark ab, so daß die Ortung von Lecks nicht mehr eindeutig möglich wird. Die bevorzugte Mindestkonzentration des Testgases in dem Gemisch liegt bei 1 Vol %, besonders bevorzugt bei 8 Vol %. Soll bei Erdgasleitungen während der Lecksuche durch den untersuchten Leitungsabschnitt weiterhin Erdgas zum Verbraucher geleitet werden so ist es gemäß den obigen Ausführungen vorteilhaft, wenn der Testgasgehalt des Gemisches zwischen 1 und 10 Vol %, bevorzugt zwischen 8 und 10 Vol %, beträgt.

Bei dem erfindungsgemäßen Verfahren ist es nicht notwendig, daß das Trägergas-Testgas-Gemisch unter hohem Druck durch die Leitung strömt. Vorzugsweise wird das Gemisch deshalb mit einem Druck von etwa 0,5 bar oberhalb des Betriebsdruckes der Gasleitung eingeleitet. Das erfindungsgemäße Verfahren kann daher auch an Leitungen durchgeführt werden, die nicht für hohe Druckbelastungen ausgelegt sind. Insbesondere hat es sich als günstig erwiesen, das erfindungsgemäße Verfahren bei einem Druck unter 10 bar, besonders bevorzugt zwischen 2 und 4 bar, durchzuführen.

Die Erfindung ist insbesondere zur Lecksuche an Leitungen geeignet, die nicht direkt zugänglich sind, so daß ein bestimmter Mindestabstand zwischen der Meßstelle und der Leitung eingehalten werden muß. Vorzugsweise wird die Meßstelle in einem Abstand bis zu 1,5 m von der Leitung vorgesehen. Bei diesem Abstand sind eventuelle Lecks noch gut detektierbar.

Die Detektion des Testgases erfolgt vorzugsweise mit Hilfe eines Massenspektrometers, da dieses Messungen mit sehr hoher Empfindlichkeit erlaubt.

Anhand des folgenden Beispiels sollen die Erfindung und weitere vorteilhafte Einzelheiten näher erläutert werden.

Zur Untersuchung einer Erdgasleitung auf Lecks wird dem durch die Leitung strömenden Erdgas Helium in einer solchen Menge zugeführt, daß der Heliumgehalt des Erdgas-Helium-Gemisches bei einem an der Erdgasleitung angeschlossenen Verbraucher, insbesondere Brenner, bei etwa 9 Vol % liegt. Es hat sich gezeigt, daß bei diesem Heliumgehalt der Brenner noch gut funktioniert. In der Leitung selbst können dabei durchaus auch höhere Heliumkonzentrationen vorkommen.

Die Erdgasleitung ist in einer Tiefe von etwa einem Meter im Erdboden verlegt. Zur Ortung von Leitungslecks wird das aus einem Leck entweichende und an die Erdoberfläche diffundierende Helium mittels eines auf dem Prinzip eines Massenspektrometers beruhenden Lecksucher gemessen. Hierzu ist an dem Lecksucher eine Saugglocke mit definiertem Volumen angeschlossen, die an den Meßstellen auf den Erdboden aufgesetzt wird und das in dieses Volumen aus dem Erdboden hineindiffundierende Helium auffängt. . Vorzugsweise wird ein Lecksucher eingesetzt mit dem der absolute Heliumgehalt in dem Volumen der Saugglocke bestimmt werden kann. Aus dem so bestimmten Wert kann dann auch auf die Größe eines vorhandenen Lecks geschlossen werden.

Vorzugsweise wird ein mobiler Lecksucher verwendet, der während des Betriebs bewegt werden kann. Der Lecksucher wird, bevorzugt mit einer Geschwindigkeit zwischen 10 und 100 Meter pro Minute, besonders bevorzugt zwischen 10 und 50 Meter pro Minute, die Meßstrecke entlang geführt.

## Patentansprüche

1. Verfahren zur Lecksuche an einer Gas-, insbesondere Erdgasleitung, wobei ein Gemisch aus einem Trägergas, insbesondere Erdgas, und einem in der Atmosphäre nur in geringer Konzentration vorkommendem Testgas durch die Leitung geleitet und an einer außerhalb der Leitung befindlichen Meßstelle das Testgas detektiert wird, **dadurch gekennzeichnet**, daß der Bereich zwischen der Leitung und der Meßstelle nicht gegen die Umgebung abgeschirmt ist.

2. Verfahren zur Lecksuche an einer schwer zugänglichen, insbesondere unterirdisch verlegten, Gasleitung nach Anspruch 1, dadurch gekennzeichnet, daß an einer oder mehreren oberhalb der Erdoberfläche befindlichen Meßstellen das Testgas detektiert wird.

3. Verfahren nach einem der Ansprüche 1 oder 2, dadurch gekennzeichnet, daß Helium als Testgas verwendet wird.

4. Verfahren nach einem der Ansprüche 1 bis 3, dadurch gekennzeichnet, daß der Testgasgehalt des Gemisches höchstens 10 Vol % beträgt.

5. Verfahren nach Anspruch 4, dadurch gekennzeichnet, daß der Testgasgehalt des Gemisches zwischen 1 und 10 Vol %, bevorzugt zwischen 8 und 10 Vol %, beträgt.

6. Verfahren nach einem der Ansprüche 1 bis 5, dadurch gekennzeichnet, daß der Druck des Gemisches zwischen 2 und 4 bar liegt.

7. Verfahren nach einem der Ansprüche 1 bis 6, dadurch gekennzeichnet, daß der Abstand zwischen der Leitung und der Meßstelle zwischen 0,5 und 1,5 m liegt.

8. Verfahren nach einem der Ansprüche 1 bis 7, dadurch gekennzeichnet, daß das Testgas mittels eines Massenspektrometers detektiert wird.
